# EUROPÄISCHE PATENTSCHRIFT

(11) **EP 0 780 990 B1**
(45) Veröffentlichungstag und Bekanntmachung des Hinweises auf die Patenterteilung: **06.10.2004**
(21) Anmeldenummer: 96120167.0
(22) Anmeldetag: 16.12.1996
(51) Int. Cl.: H04B 1/20

(54) **Verfahren zur Fernsteuerung von elektronischen Geräten und Vorrichtung zur Fernsteuerung von elektronischen Geräten sowie elektronisches Gerät**
Method and apparatus for remote control of electronic equipment
Procédé et dispositif de commande à distance d'equipement électronique

(30) Priorität: 23.12.1995 DE 19548776
(43) Veröffentlichungstag der Anmeldung: 25.06.1997
(73) Patentinhaber: DEUTSCHE THOMSON-BRANDT GMBH, 78048 Villingen-Schwenningen (DE)
(72) Erfinder: Adolph, Dirk, 30952 Ronnenberg (DE); Hütter, Ingo, 29223 Celle (DE); Herpel, Carsten, 30171 Hannover (DE)
(74) Vertreter: Schäferjohann, Volker Willi, Dipl.-Phys.

(56) Entgegenhaltungen:
- EP-A- 0 626 635
- DE-A- 3 710 218
- US-A- 5 410 326

## Beschreibung

Die Erfindung betrifft ein Verfahren zur Fernsteuerung von elektronischen Geräten und eine Vorrichtung zur Fernsteuerung von elektronischen Geräten sowie ein elektronisches Gerät

### Stand der Technik

Die Erfindung geht aus von einem Verfahren zur Fernsteuerung von elektronischen Geräten nach der Gattung des unabhängigen An-spruches 1. Es ist schon ein Verfahren zur Fernsteuerung von elektronischen Geräten aus der US 5 282 028 bekannt. Daraus ist es bekannt, eine Fernbedienung so auszulegen, daß mit ihr mehrere Geräte bedienbar sind. Speziell wird ein digitaler Musiktuner und eine sogenannte Set-Top-Box mit Hilfe der Fern-bedienung bedient. Dabei ist eine Datenübertragung sowohl von der Fernbedienung, ausgehend zu einem der elektronischen Geräte, als auch von einem elektronischen Gerät zu der Fernbedienung möglich. Mit Hilfe eines entsprechenden Kommunikationsprotokolls können Daten bezüglich der empfangbaren Programme von dem digitalen Musiktuner zu der Fernbedienung übertragen werden. Diese Daten werden dann auf einer Anzeigeeinheit der Fern-bedienung dargestellt. Hinsichtlich der Fernbedienung wird ge-nannt, daß diese einen programmierten Speicher enthält, in dem Informationsdaten bezüglich der Fernbedienungsfunktionen von einer großen Anzahl verschiedener Geräte abgespeichert sind. Jedes dieser Geräte kann dabei ein separates Kommunikations-protokoll besitzen, nach dem es fernbedient werden kann. Da auf dem Markt eine Vielzahl von Geräten verschiedenen Typs angeboten wird, muß der Speicher in der Fernbedienung eine Vielzahl von unterschiedlichen Kommunikationsprotokollen für die jeweiligen Gerätetypen enthalten.

Aus der DE-P-37 10 218 ist eine Fernsteuerung bekannt, die einen Tastenfunktions- und Anzeigespeicher zum vorübergehenden Speichern der durch die zu steuernden Geräte übertragenen Tastenfunktionsanzeigeinformationen aufweist. Somit ist keine Modifikation der Fernsteuerung notwendig, wenn neu zu steuernde Geräte zu dem Gerätepark hinzugefügt werden. Bei der hier beschriebenen Fernsteuerung wird für die Bedienung eines Gerätes zuerst ein allgemeiner Gerätecode gesendet. Daraufhin senden alle aktiven Geräte ihre Gerätekennung nach vorgegebenen Zeiten. Alle verfügbaren Geräte werden auf dem Display der Fernbedienung dargestellt. Der Benutzer wählt eines der Geräte aus. Nach Empfang der zugehörigen Gerätekennung sendet das Gerät seine möglichen Bedienungsfunktionen. Daraufhin kann die Bedienung des Gerätes entsprechend der auf der Fernbedienung angezeigten Funktionen durchgeführt werden.

Aus der EP-A-0 626 635 ist eine Fernsteuerung für elektronische Geräte bekannt, die von den verschiedenen elektronischen Geräten ein jeweiliges grafisches Benutzeroberflächenprogramm automatisch nach Einschaltung des elektronischen Gerätes erhält.

### Erfindung

Aufgabe der Erfindung ist es, ein Verfahren und eine Vorrichtung zur Fernsteuerung/Fernbedienung von elektronischen Geräten anzugeben, das in der Lage ist eine Vielzahl von elektronischen Geräten zu steuern, wobei auf einfache Weise auch zukünftig hergestellte elektronische Geräte mit der Fernsteuerung bedienbar sein sollen.

Das erfindungsgemäße Verfahren mit den Merkmalen des Anspruches 1 hat den Vorteil, dass die Informationsdaten bezüglich der Fernsteuerungsfunktionen eines elektronischen Gerätes nicht von vornherein in dem Speicher der Fernsteuerung gespeichert sein müssen. Diese Daten werden von dem elektronischen Gerät zu der Fernsteuerung übertragen. Die Fernsteuerung speichert diese Daten in ihrem Speicher ab und ist damit zukünftig in der Lage das elektronische Gerät zu bedienen. Sehr vorteilhaft ist dabei, wenn die Fernsteuerung/Fernbedienung den elektronischen Geräten einen Fernsteuerungstypcode übermittelt woraufhin die elektronischen Geräte den entsprechend geeigneten Satz an Informationsdaten bezüglich der Fernsteuerungsfunktionen zu der Fernbedienung liefern.

Durch die in den abhängigen Ansprüchen aufgeführten Maßnahmen sind vorteilhafte Weiterbildungen und Verbesserungen des in Anspruch 1 angegebenen Verfahrens möglich. So ist es vorteilhaft, wenn zusätzlich zu den Informationsdaten bezüglich der Fernsteuerungsfunktionen des elektronischen Gerätes auch Informationsdaten bezüglich der Eingangs- und Ausgangsmöglichkeiten des elektronischen Gerätes zu der Fernsteuerung übertragen werden. Damit sind dann auch sehr leicht multimediale Anwendungen, wie z.B. das Überspielen der Musik von einem Videoband auf eine Stereokassette, möglich. Ein anderes Beispiel stellt die Einbindung bisher diziplinfremder Gerät, wie zum Beispiel die Führung eines Telefongesprächs über die Stereoanlage dar. Trifft zum Beispiel ein Telefongespräch ein, so kann die Fernsteuerung darüber informiert werden und aufgrund der übermittelten Eingangs- / Ausgangsinformationen kann auf der Anzeige der Fernsteuerung die Option einer Ausgabe des Gesprächs über die Stereoanlage eingeblendet werden. Der Benutzer schaltet über die Fernsteuerung das laufende Radioprogramm aus und leitet das Telefongespräch auf die Stereoanlage um.

Für eine Vorrichtung zur Fernsteuerung eines elektronischen Gerätes ist es sehr vorteilhaft, wenn auf der Anzeigeeinheit der Fernsteuerung den empfangenen Informationsdaten zugeordnete Symbole dargestellt werden. Damit wird dann die Bedienung eines neu in das System integrierten Gerätes für den Benutzer sehr einfach gestaltet. In einer besonderen Ausgestaltung kann die Anzeigeeinheit der Fernsteuerung als berührungssensitive Anzeigeeinheit ausgebildet sein. Dann brauchen auf dieser Anzeigeeinheit lediglich nur die den Steuerungsfunktionen zugeordneten Symbole dargestellt zu werden. Der Bediener kann eine entsprechende Funktion dann durch einfaches Berühren des Symbols auslösen.

Ebenfalls vorteilhaft ist, wenn die Fernsteuerung eine zusätzliche Abfragetaste aufweist, bei deren Betätigung ein Abfragecode ausgesendet wird, mit dem das mindestens eine elektronische Gerät zur Übermittlung seiner Informationsdaten bezüglich der Fernsteuerungsfunktionen aufgefordert wird.
Mit Hilfe des Fernsteuerungstypcodes teilt dann die Fernsteuerung dem elektronischen Gerät mit, um welche Version der Fernsteuerung es sich handelt und damit auch über welche Anzeigemöglichkeiten die Fernsteuerung verfügt. Demgemäß kann das elektronische Gerät entweder nur bestimmte Funktionscodes oder ganze Graphikinformationen zu der Fernsteuerung übertragen.

Für ein elektronisches Gerät ist es besonders vorteilhaft, dass es einen Speicher aufweist, in dem Informationsdaten bezüglich der Fernsteuerungsfunktionen des elektronischen Gerätes abgespeichert sind und, dass es Mittel aufweist, die diese Informationsdaten zumindest zum Teil s.o. automatisch, insbesondere nach Anschaltung an ein Stromversorgungsnetz, absenden.

Sehr vorteilhaft ist auch, wenn das elektronische Gerät Informationsdaten bezüglich seiner Eingangs- und Ausgangsmöglichkeiten in seinem Speicher enthält und diese Daten zusätzlich zu den Informationsdaten bezüglich der Fernsteuerungsfunktionen ausstrahlt. Dadurch werden dann die bereits zuvor erwähnten Multimedia-Anwendungen ermöglicht.

Weiterhin vorteilhaft ist, wenn jedes einzelne zu steuernde Gerät eine Identifikationsnummer aufweist, über die es separat ansprechbar ist. Dadurch werden Fehlfunktionen vermieden, wenn einzelnen Geräte zum Teil identische Steuerfunktionen aufweisen.

Ebenfalls vorteilhaft ist, dass das elektronische Gerät mindestens einen weiteren Satz von Informationsdaten bezüglich seiner Fernsteuerungsfunktionen im Speicher abgespeichert hat, wobei der weitere Satz von Informationsdaten für einen anderen Fernsteuerungstyp vorgesehen ist. Es wird dann möglich, daß das Gerät, abhängig von der verwendeten Fernsteuerung, unterschiedliche Arten der Benutzerführung anbietet. Außerdem wird dadurch eine Abkopplung vom technischen Fortschritt, z.B. in der Displaytechnik, erreicht.

### Zeichnungen

Ein Ausführungsbeispiel der Erfindung ist in der Zeichnung dargestellt und wird in der nachfolgenden Beschreibung näher erläutert. **Es zeigen:**
- **Fig. 1**: eine Zusammenschaltung mehrerer elektronischer Geräte mit Hilfe eines Datenübertragungskanals;
- **Fig. 2**: ein grobes Blockschaltbild zur Anschaltung der elektronischen Geräte an den Übertragungskanal;
- **Fig. 3**: eine schematische Darstellung der Außenansicht eines Fernsteuerungsgerätes;
- **Fig. 4**: die Darstellung der möglichen Fernsteuerungsfunktionen eines CD-Abspielgerätes auf der Anzeigeeinheit des Fernsteuerungsgerätes;
- **Fig. 5**: ein grobes Blockschaltbild des Fernsteuerungsgerätes;
- **Fig. 6**: ein grobes Blockschaltbild eines elektronischen Gerätes;
- **Fig. 7**: ein Flußdiagramm für ein Programm für ein Fernsteuerungsgerät zur Abfrage der bedienbaren Geräte;
- **Fig. 8**: ein Flußdiagramm für ein Programm für ein elektronisches Gerät, das nach Empfang eines Abfragecodes abgearbeitet wird;
- **Fig. 9**: ein Flußdiagramm für ein Programm für ein Fernsteuerungsgerät, das zur Bedienungsanforderung eines elektronischen Gerätes abgearbeitet wird;
- **Fig. 10**: ein Flußdiagramm für ein Programm, das nach Empfang einer Bedienungsanforderung in einem elektronischen Gerät abgearbeitet wird;
- **Fig. 11**: den Aufbau einer Abfragebotschaft, die von dem Fernsteuerungsgerät ausgesendet wird;
- **Fig. 12**: den Aufbau einer Bestätigungsbotschaft, die von einem elektronischen Gerät nach Empfang einer Abfragebotschaft ausgesendet wird;
- **Fig. 13**: den Aufbau einer Bedienungsanforderungsbotschaft, die von einem Fernsteuerungsgerät ausgesendet wird;
- **Fig. 14**: den Aufbau einer Informationsbotschaft, die von einem elektronischen Gerät nach Empfang einer Bedienungsanforderungsbotschaft ausgesendet wird und
- **Fig. 15**: den Aufbau einer Bedienfunktionsbotschaft, die von dem Fernsteuerungsgerät ausgesendet wird.

### Beschreibung der Erfindung

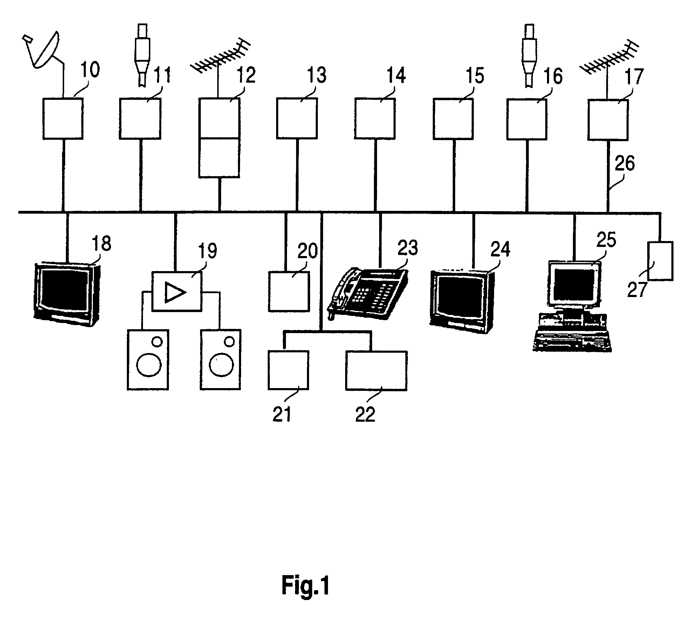

In Fig. 1 sind verschiedenste Endgeräte dargestellt, die über einen digitalen Datenübertragungskanal miteinander verbunden sind. Mit der Bezugszahl 10 ist ein Satellitenempfangsgerät bezeichnet. Die Bezugszahl 11 bezeichnet ein Fernsehgerät, das an das Breitbandkabelnetz angeschlossen ist. Mit der Bezugszahl 12 ist ein Fernsehgerät bezeichnet, das an eine Hausantenne angeschlossen ist. Die Bezugszahl 13 bezeichnet ein Faxgerät. Mit der Bezugszahl 14 ist ein Modem bezeichnet. Mit der Bezugszahl 15 ist ein Radiogerät bezeichnet, das mit einer Wurfantenne aus-gestattet ist. Mit der Bezugszahl 16 ist ein Radiogerät be-zeichnet, das ebenfalls mit dem Breitbandkabelnetz verbunden ist. Die Bezugszahl 17 bezeichnet ein Radiogerät, das an eine Hausantenne angeschlossen ist. Die Bezugszahl 18 bezeichnet ein drittes Fernsehgerät im Haus. Die Bezugszahl 19 bezeichnet den Verstärker einer Stereoanlage. Mit der Bezugszahl 20 ist ein Videorecorder bezeichnet. Die Bezugszahl 21 bezeichnet ein CD-Abspielgerät (CD steht hier für Compact Disk). Die Bezugszahl 22 bezeichnet einen Drucker. Die Bezugszahl 23 bezeichnet einen Telefonapparat. Mit der Bezugszahl 24 ist ein viertes Fernsehgerät bezeichnet. Die Bezugszahl 25 bezeichnet einen Computer. Mit der Bezugszahl 26 ist der digitale Datenübertragungskanal bezeichnet. An diesem ist schließlich noch ein Fernsteuerungsgerät 27 angeschlossen. Die dargestellten Geräte können z.B. in einem Haus angebracht sein. Der Datenübertragungskanal 26 ist mindestens zum Teil drahtlos ausgeführt. Sämtliche dargestellten Geräte 10 bis 25 sind durch das Fernsteuerungsgerät 27 fernbe-dienbar.

Da nach Einführung der digitalen Signalverarbeitung mittlerweile sämtliche dargestellten Geräte 10 bis 25 als digital arbeitende Geräte erhältlich sind, können alle diese Geräte Daten über den digitalen Übertragungskanal austauschen. Damit ist die Abgrenzung der einzelnen Geräte weitgehend aufgehoben. Es entsteht ein Geräteverbund, der auch mit dem Begriff Multimedia-Verbund bezeichnet wird.

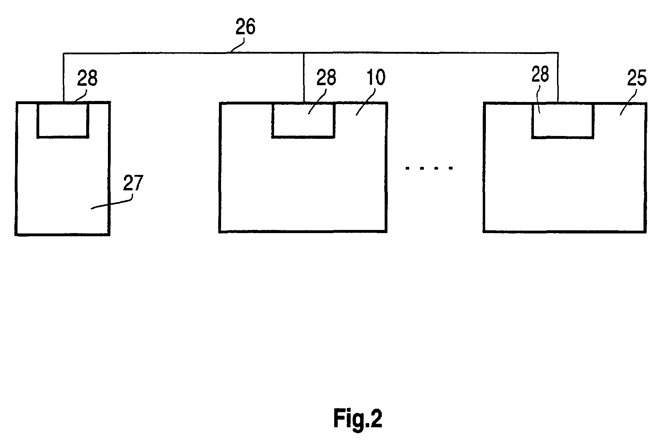

In Fig. 2 ist der gleiche Geräteverbund wie in Fig. 1 schematisiert dargestellt. Darin bezeichnen gleiche Bezugszahlen die gleichen Komponenten wie in Fig. 1. Diese Bezugszahlen werden deshalb nicht nochmals erläutert. Mit der Bezugszahl 28 ist eine Kommunikationsschnittstelle bezeichnet. Jedes der in Fig. 2 dargestellten Geräte enthält eine derartige Kommunikationsschnittstelle 28. Derartige Kommunikationsschnittstellen 28 sind aus dem Stand der Technik hinreichend bekannt. Es wird diesbezüglich auf die serielle Schnittstelle mit der Bezeichnung RS232, oder auch eine IIC-Busschnittstelle (Inter Integrated Circuit) oder eine CAN-Busschnittstelle (Controller Area Network), die in der Computertechnik weit verbreitet angewendet werden. In der Kommunikationsschnittstelle 28 sind Schaltungen enthalten, die ein festgelegtes Datenübertragungsprotokoll realisieren. Ein solches Übertragungsprotokoll kann auch mit Hilfe von programmtechnischen Maßnahmen und einem Mikrorechner realisiert werden.

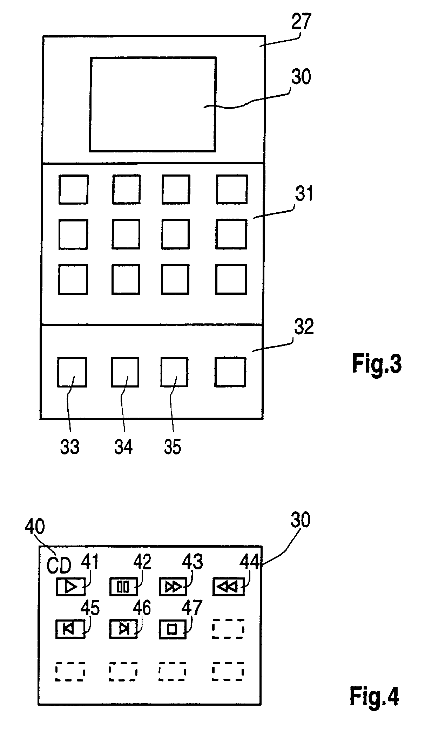

Die äußere Ansicht der Fernsteuerung 27 ist in Fig. 3 näher dar-gestellt. Mit der Bezugszahl 30 ist die Anzeigeeinheit der Fern-steuerung 27 bezeichnet. Die Bezugszahl 31 bezeichnet ein Tastenfeld. Das Tastenfeld 31 stellt ein frei programmierbares Tastenfeld dar. Mit der Bezugszahl 32 ist ein weiteres Tastenfeld bezeichnet. Die darin enthaltenen Tasten sind fest programmiert, ihnen ist jeweils eine Sonderfunktion zugewiesen. Die Bezugszahl 33 bezeichnet dabei eine Auswahltaste.
Mit dieser Auswahltaste wird ein zu bedienendes Gerät ausgewählt. Die Auswahltaste 33 kann wiederholt betätigt werden. Bei jeder Betätigung dieser Auswahltaste 33 wird auf der Anzeigeeinheit 30 ein Symbol eines anderen bedienbaren Gerätes darge-stellt. Die Bezugszahl 34 bezeichnet eine Abfragetaste. Mit Hilfe dieser Abfragetaste 34 können die Informationsdaten der bedienbaren Geräte abgefragt werden. Diese Taste wird immer dann betätigt, wenn zu dem in Fig. 2 dargestellten Geräteverbund noch ein weiteres Gerät hinzugefügt werden soll. Der Abfragevorgang wird nachfolgend noch genau erläutert werden.

Mit der Bezugszahl 35 ist eine Bedienungsanforderungstaste be-zeichnet. Diese Taste wird betätigt, wenn über die Auswahltaste 33 das gewünschte zu bedienende Gerät ausgewählt worden ist. Durch Drücken der Bedienungsanforderungstaste 35 wird dann dem zu bedienenden Gerät ein Bedienungsanforderungscode übermittelt. Anhand dieses Codes erkennt das entsprechende Gerät, daß es nachfolgend bedient werden soll und übermittelt als Antwort auf diesen Code seine speziellen Informationsdaten bezüglich seiner Bedienungsfunktionen. Auch dieser Vorgang wird nachfolgend noch näher erläutert werden.
Es können noch weitere fest programmierte Tasten in dem Tasten-feld 32 vorgesehen sein.

Fig. 4 zeigt jetzt ein auf der Anzeigeeinheit 30 dargestelltes Bild, das für die Fernsteuerung eines CD-Abspielgerätes vorge-sehen ist. Das CD-Symbol 40 deutet an, daß das dargestellte Bild für die Fernsteuerung eines CD-Abspielgerätes gültig ist. Mit der Bezugszahl 41 ist ein Abspielsymbol bezeichnet. Mit der Bezugszahl 42 ist ein Pause-Symbol bezeichnet. Die Bezugszahl 43 bezeichnet ein Symbol für einen schnellen Vorlauf und die Bezugszahl 44 bezeichnet ein Symbol für einen schnellen Rücklauf. Die Bezugszahl 45 bezeichnet ein Vorwärtssprung-Symbol und die Bezugszahl 46 bezeichnet ein Rückwärtssprung-Symbol. Die Bezugszahl 47 bezeichnet schließlich ein Stop-Symbol. Die genannten Symbole 41 bis 47 zeigen dem Benutzer jeweils eine mögliche Bedienungsfunktion des CD-Abspielgerätes an. Selbstverständlich könnten hier noch weitere Symbole für weitere Funk-tionen eines CD-Abspielgerätes vorgesehen sein. Die Anordnung der Symbole 41 bis 47 ist so getroffen, daß diese mit der An-ordnung der Tasten im frei programmierbaren Tastenfeld 31 übereinstimmt. Die Anordnung des Abspiel-Symbols in der linken oberen Ecke der Anzeigeeinheit 30 informiert den Benutzer der Fernsteuerung 27 beispielsweise darüber, daß er bei Drücken der linken oberen Taste im frei programmierbaren Tastenfeld 31 die Abspiel-Funktion des CD-Abspielgerätes aktiviert. Entsprechendes gilt für die dargestellten Symbole 41 bis 47.

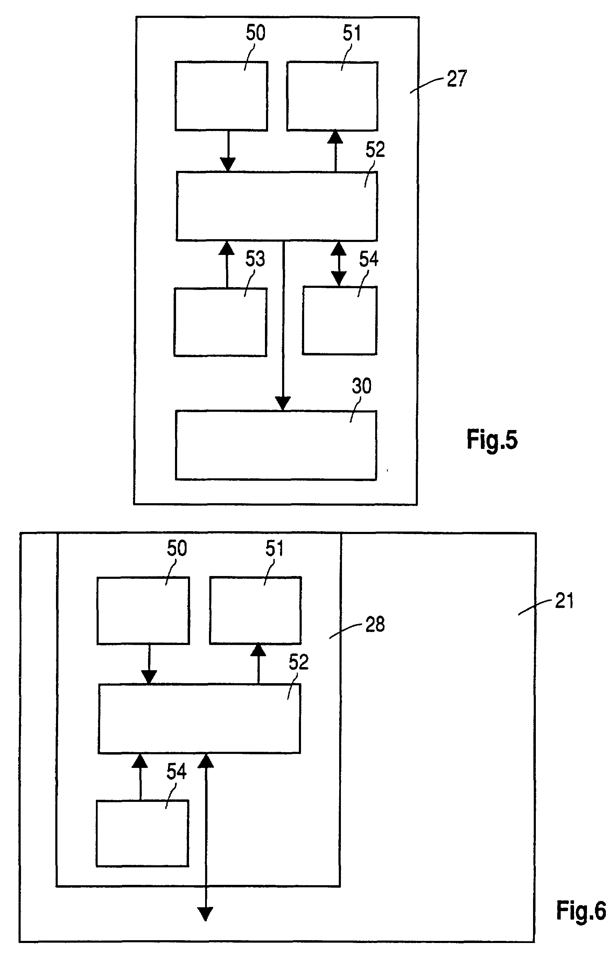

In Fig. 5 ist ein Blockschaltbild der Fernsteuerung 27 dargestellt. Mit der Bezugszahl 50 ist eine Empfangsschaltung bezeichnet. Derartige Empfangsschaltungen sind aus dem Stand der Technik hinreichend bekannt. Es handelt sich um eine Empfangsschaltung für Infrarotstrahlung. Die Empfangsschaltung 50 steht mit einem Mikrorechner 52 in Verbindung. Weiterhin ist eine Sendeschaltung 51 vorgesehen. Auch die Sendeschaltung ist aus dem Stand der Technik allgemein bekannt. Es handelt sich ebenfalls um eine Sendeschaltung für Infrarotstrahlung. Auch die Sendeschaltung 51 steht mit dem Mikrorechner 52 in Verbindung. Weiterhin ist eine Bedieneinheit 53 vorgesehen. An der Bedieneinheit 53 sind die Tastenfelder 31 und 32 angeschlossen. Die Bedieneinheit 53 steht auch mit dem Mikrorechner 52 in Verbindung.
Weiterhin ist noch eine Speichereinheit 54 vorgesehen. Über einen bidirektionalen Bus hat der Mikrorechner 52 Zugriff zur Speichereinheit 54. Schließlich ist auch die Anzeigeeinheit 30 dargestellt. Die Anzeigeeinheit 30 steht ebenfalls mit dem Mikrorechner 52 in Verbindung. Die Speichereinheit 54 wird als Datenspeicher verwendet. Der Mikrorechner 52 weist noch einen programmierten Speicher auf, in dem, wie aus dem Stand der Technik hinreichend bekannt, das schon zuvor erwähnte Datenübertragungsprotokoll abgelegt ist.

In Fig. 6 ist jetzt ein Blockschaltbild des CD-Abspielgerätes 21 dargestellt. Dabei ist aber nur der Teil, der sich auf die Kommunikationsschnittstelle 28 bezieht, näher dargestellt. Die restlichen Teile des CD-Abspielgerätes sind aus dem Stand der Technik wohl bekannt. Die Bezugszahlen in Fig. 6 stimmen mit den Bezugszahlen in Fig. 5 überein und bezeichnen jeweils die gleichen Komponenten. Zu erwähnen bleibt dann nur noch, daß von dem Mikrorechner 52 ein bidirektionaler Bus ausgeht, der zu der Gerätesteuerung des CD-Abspielgerätes führt.

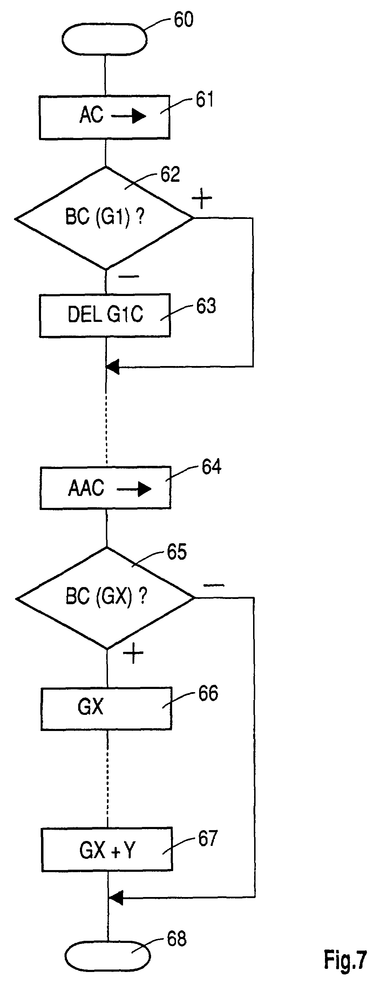

Nachfolgend wird auf den Vorgang näher eingegangen, der in dem Fernsteuerungsgerät 27 abläuft, nachdem die Abfragetaste 34 betätigt worden ist. Dieser Vorgang ist in Fig. 7 dargestellt.

Mit der Bezugszahl 60 ist der Programmstart bezeichnet, der ausgelöst wird, durch die Betätigung der Abfragetaste 34. Im Programmschritt 61 wird ein Abfragecode ausgesendet. Der Abfragecode wird mit einer Abfragebotschaft ausgesendet.

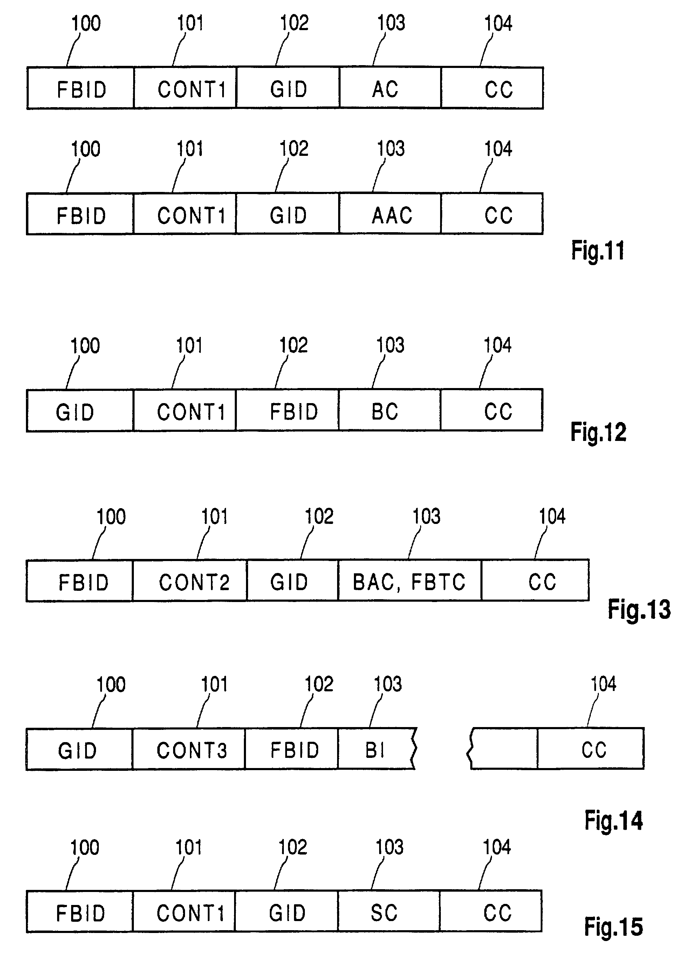

Der Aufbau der Abfragebotschaft ist in Fig. 11 dargestellt. Nach dem nicht dargestellten Startbit folgt ein Quelladressfeld 100, in dem als Quelladresse die Identifikationsnummer der Fernsteuerung eingetragen ist. An das Quelladressfeld 100 schließt sich ein Steuerungsfeld 101 an. In diesem Steuerungsfeld 101 wird durch den hier eingetragenen Code festgelegt, wie die Botschaft auszuwerten ist. Das Steuerungsfeld 101 bestimmt damit, wie die nachfolgenden Felder aufgebaut sind, insbesondere welche Länge und Bedeutung sie haben. An das Steuerungsfeld 101 schließt sich ein Zieladressfeld 102 an. In dieses Feld wird eine Identifikationsnummer eines elektronischen Gerätes eingetragen, dessen Informationsdaten bereits bei einem früheren Abfragevorgang eingelesen wurden. An das Zieladressfeld 101 schließt sich dann ein Datenfeld 103 an. Hierin wird ein Abfragecode abgelegt. Damit wird dem Gerät, das die Abfragebotschaft empfängt, mitgeteilt, daß ein Abfragevorgang erfolgt und daß es demgemäß zu reagieren hat. An das Datenfeld 103 schließt sich dann auch ein Prüfcodefeld 104 an. Hierin ist eine Prüfsumme abgelegt, mit deren Hilfe die fehlerfreie Übertragung der Botschaft nachgewiesen werden kann. Als letztes folgt noch ein Stopbit, das jedoch in Fig. 11 nicht dargestellt ist.

Der in Programmschritt 61 ausgestrahlte Abfragecode ist also für ein bestimmtes elektronisches Gerät bestimmt und wird nur von diesem elektronischen Gerät akzeptiert. Im Programmschritt 62 wartet die Fernsteuerung auf eine Bereitschaftsmeldung des angesprochenen Gerätes. Wenn diese Meldung innerhalb einer vorgegebenen Zeit empfangen wird, wird das Programm mit Programmschritt 61 fortgeführt, wobei dann jedoch ein weiteres elektronisches Gerät abgefragt wird, dessen Gerätecode zuvor bereits in dem Speicher der Fernsteuerung eingetragen worden ist. Kommt in Programmschritt 62 innerhalb der vorgegebenen Zeit keine entsprechende Bestätigungsbotschaft bei der Fernsteuerung an, wird der zugehörige Gerätecode aus der Liste im Speicher 54 entfernt. Dies geschieht in Programmschritt 63. In den nach folgenden Programmschritten werden ebenfalls Abfragebotschaften zu den anderen externen Geräten übermittelt, deren Gerätecodes in die Liste der zu steuernden Geräte im Speicher 54 der Fernsteuerung eingetragen waren. Nachdem das letzte der Geräte seinen Bereitschaftscode übermittelt hatte, folgt im Programmschritt 64 die Absendung einer weiteren Abfragebotschaft.

Der Aufbau dieser Abfragebotschaft ist ebenfalls in Fig. 11 dargestellt. Diese Botschaft besitzt den gleichen Aufbau wie die zuvor erläuterte Abfragebotschaft. Der Unterschied besteht darin, daß in das Zieladressfeld 102 ein allgemeiner Gerätecode eingetragen wird. Daran erkennen alle externen Geräte, die zuvor innerhalb einer vorgegebenen Zeit keine an sie adressierte Abfragebotschaft erkannt haben, daß sie zur Absendung einer Be-stätigungsbotschaft aufgefordert sind. Sie übermitteln dann sofort ihre Bestätigungsbotschaft an das Fernsteuerungsgerät 27. Im Programmschritt 65 wartet daher das Fernsteuerungsgerät 27 auf das Eingehen einer weiteren Bestätigungsbotschaft. Wenn eine solche Botschaft eingeht, wird der zugehörige Gerätecode ebenfalls in die Liste der fernbedienbaren Geräte im Speicher 54 eingetragen. Dies findet dann in Programmschritt 66 statt. Sollte es vorkommen, daß mehrere Geräte gleichzeitig ihre Bestätigungsbotschaften absenden, so muß sicher gestellt sein, daß keine Fehlfunktionen eintreten. Deshalb würfelt jedes fernbedienbare Gerät, dessen Gerätecode noch nicht in die Liste der fernbedienbaren Geräte im Speicher 54 der Fernsteuerung 27 eingetragen ist, eine Zufallszahl, die bestimmt, nach welchem Zeitraum das jeweilige Gerät seine Bestätigungsbotschaft absendet. So werden dann Datenkollisionen weitestgehend vermieden. Nachdem im Programmschritt 67 das letzte externe Gerät seine Bestätigungsbotschaft abgesendet hatte, wird dieser Programmteil im Programmschritt 68 beendet. Falls im Programmschritt 65 nach einer vorgegebenen Maximalzeit keine Bestätigungsbotschaft von der Fernsteuerung 27 mehr empfangen wurde, wird das Programm direkt mit Programmschritt 68 beendet.

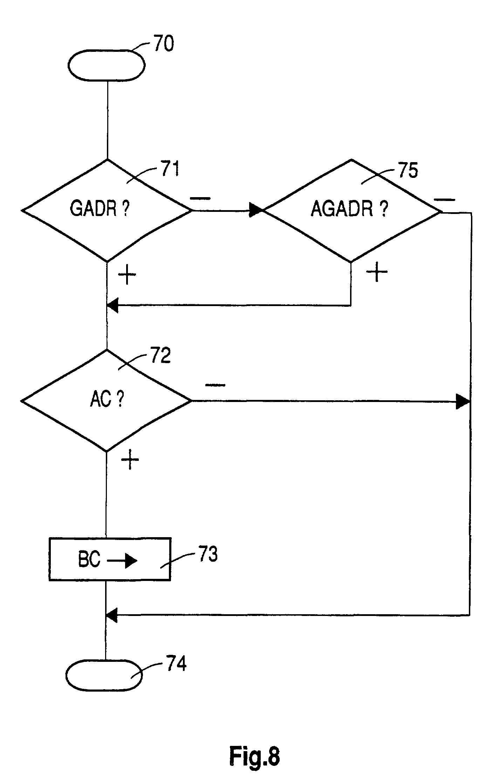

Fig. 8 zeigt jetzt den Programmablauf von seiten eines elektronischen Gerätes 10 bis 25, nachdem es eine Abfragebotschaft erhalten hatte. Mit der Bezugszahl 70 ist der Programmstart bezeichnet. Dieser wird durch den Empfang einer Abfragebotschaft ausgelöst. Im Programmschritt 71 wird die empfangene Botschaft eingehend überprüft, ob sie im Zieladressfeld 103 die Geräteadresse dieses Gerätes enthält. Ist diese Adresse in dem Zieladressfeld 103 enthalten, wird im Programmschritt 72 abgefragt, ob das Datenfeld 103 den Abfragecode enthält. Ist dies ebenfalls der Fall, so wird eine Bestätigungsbotschaft zur Fernsteuerung 27 zurückgesendet. Dies geschieht dann in Programmschritt 73. Danach ist das Programm in Programmschritt 74 beendet. Wurde in Abfrage 71 erkannt, daß im Zieladressfeld 102 nicht die zugehörige Geräteadresse einge-tragen ist, wird im Programmschritt 75 abgefragt, ob in dem entsprechenden Zieladressfeld 102 eine allgemeine Geräteadresse eingetragen ist. Ist dies der Fall, wird das Programm mit Programmschritt 72 fortgeführt. Ist dies nicht der Fall, wird das Programm sofort im Programmschritt 74 beendet.

Fig. 12 zeigt den Aufbau einer Bestätigungsbotschaft. Der Aufbau ist prinzipiell derselbe wie in Fig. 11. Die gleichen Bezugszahlen bezeichnen das Gleiche wie in Fig. 11. Allerdings ist bei einer Bestätigungsbotschaft im Quelladressfeld 100 die Geräteidentifikationsnummer eingetragen. Im Zieladressfeld 102 ist dann als Zieladresse die Identifikationsnummer der Fernsteuerung eingetragen.

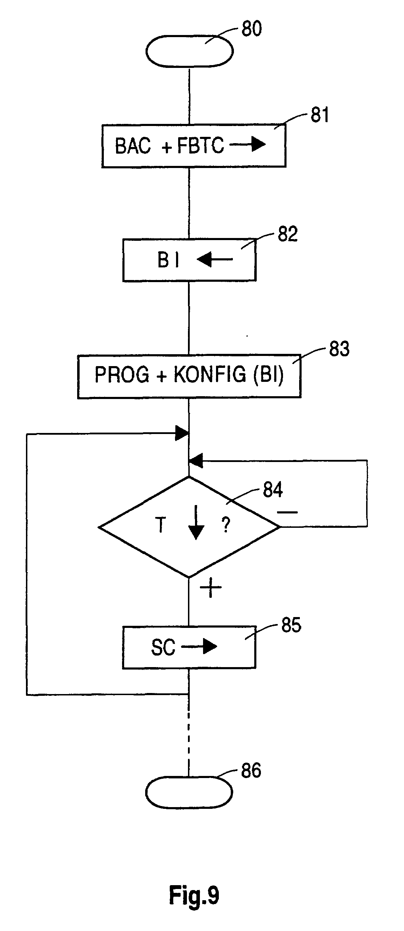

In Fig. 9 ist jetzt ein Ablaufdiagramm für ein Programm darge-stellt, das nach Betätigung der Bedienungsanforderungstaste 35 vom Fernsteuerungsgerät 27 abgearbeitet wird. Die Bezugszahl 80 bezeichnet den Programmstart. Mit der Bezugszahl 81 ist dann ein Programmschritt bezeichnet, in dem eine Bedienungsanforderungsbotschaft zu dem ausgewählten Gerät übertragen wird. Der Aufbau dieser Bedienungsanforderungsbotschaft ist in Fig. 13 dargestellt. Die Besonderheit dieser Botschaft besteht darin, daß in dem Datenfeld 103 außer dem Bedienungsanforderungscode zusätzlich noch ein Fernsteuerungstypcode übertragen wird. Da das Datenfeld 103 in diesem Fall länger ist als in den vorhergehenden Fällen, muß auch in das Steuerungsfeld 101 ein entsprechender Steuerungscode eingetragen sein. Im Quelladressfeld 100 ist die Identifikationsnummer der Fernsteuerung eingetragen und im Zieladressfeld 102 ist die Geräteidentifikationsnummer eingetragen.
Im anschließenden Programmteil 82 wird die Bedieninformationsbotschaft ausgewertet, die dann von dem adressierten Gerät zu der Fernsteuerung übertragen wird.
In Programmschritt 83 findet dann die Auswertung der mit der Informationsbotschaft übertragenen Bedieninformationen statt. Dabei werden die übertragenen Funktionscodes sowie Bedeutungscodes, in den Speicher 54 der Fernsteuerung eingetragen. Ent-sprechend der empfangenen Daten wird dann auch die Anzeige neu gestaltet, wie z.B. in Fig. 4 dargestellt. Die hierfür nötigen Programmteile sind jedoch aus dem Stand der Technik bereits bekannt und brauchen hier nicht noch mal erläutert werden. Danach wartet das Programm im Programmschritt 84 auf die Betätigung einer Taste des Tastenfeldes 31. Wenn eine Taste betätigt wird, wird im Programmschritt 85 der zugehörige Steuerungscode zu dem elektronischen Gerät übertragen. Das Programm wird dann wieder mit Programmschritt 84 fortgeführt, bis es durch Betätigung einer anderen Funktionstaste beendet wird.

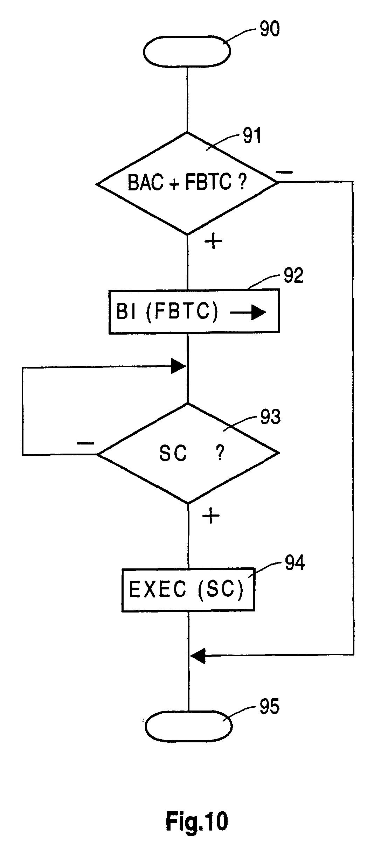

Fig. 10 zeigt jetzt ein Ablaufdiagramm für ein elektronisches Gerät, das die Bedienanforderungsbotschaft erhalten hat. Im Pogrammschritt 90 wird das Programm gestartet. In Abfrage 91 wird überprüft, ob die empfangene Bedienanforderungsbotschaft einen Bedienanforderungscode sowie einen Fernsteuerungstypcode als auch die zugehörige Geräteidentifikationsnummer enthält. Wenn dies der Fall ist, wird die bereits erwähnte Informationsbotschaft zum Fernsteuerungsgerät 27 ausgesendet. Dies geschieht dann in Programmschritt 92.

Der Aufbau der Informationsbotschaft ist in Fig. 14 dargestellt. Im Quelladressfeld 100 dieser Botschaft ist die Geräteidentifikationsnummer eingetragen. Im Zieladressfeld 102 dieser Bot-schaft ist die Fernsteuerungsidentifikationsnummer eingetragen. Im Steuerungsfeld 101 ist ein Steuerungscode für die Informationsbotschaft eingetragen. Im Datenfeld 103 dieser Botschaft sind dann nacheinander die Funktionscodes sowie Bedeutungscodes der Fernsteuerungsfunktionen des Gerätes eingetragen. Zusätzlich können in dem Datenfeld 103 Informationen bezüglich der Eingangs- oder AusgangsMöglichkeiten des jeweiligen Gerätes eingetragen werden. Derartige Informationen sind z.B. bei einem Videorecorder die Informationen, daß das Gerät folgende Eingänge für Audioinformationen aufweist: nämlich einen Stereokanal, einen Monokanal und einen Eingang für ein fünfkanaliges Dolby-Surround-Programm. Hinsichtlich der Videoinformationen kann als Eingangsmöglichkeit die Information "Eingang für Videodaten" nach dem PAL-Standard bzw. nach dem PAL-Plus-Standard angegeben sein. Als Ausgangs-Information können dann die gleichen Angaben wie bei der Eingangs-Information gemacht sein. Bei einem Fernsehempfänger sehen dann diese Eingangs- und Ausgangs-Informationen beispielsweise wie folgt aus: Als Eingangs-Möglichkeiten wird für Audiodaten ein Mono-Eingang sowie ein Stereo-Eingang zur Verfügung gestellt. Für Videodaten wird als Eingangs-Möglichkeit ein PAL bzw. PAL-Plus-Eingang zur Verfügung gestellt. Hier kommen dann als Ausgangs-Möglichkeiten die gleichen Informationen in Betracht. Weiterhin kommt noch als Ausgangs-Möglichkeit die Fähigkeit des Fernsehempfängers in Betracht, Videotextdaten zu dekodieren.
Nachdem die Steuerungsinformationen zur Fernsteuerung übertragen wurden, wartet das Programm in Abfrage 93 darauf, ob eine Bedienfunktionsbotschaft eingeht. Wenn dies der Fall ist, wird die dem entsprechenden Steuerungscode zugeordnete Funktion ausgeführt. Dies geschieht dann im Programmschritt 94. In Programm-schritt 95 ist dann dieser Programmteil beendet.

In Fig. 15 ist der Aufbau der Bedienfunktionsbotschaft darge-stellt. Der übertragene Steuerungscode wird in das Datenfeld 103 eingetragen. In das Quelladressfeld 100 ist die Identifikationsnummer der Fernsteuerung eingetragen. In das Zieladressfeld 102 ist die Geräteidentifikationsnummer eingetragen.

In dem Ausführungsbeispiel wurde davon ausgegangen, daß jeder Fernsteuerung sowie jedem elektronischen Gerät eine eigene Identifikationsnummer zugeordnet ist. Anhand dieser Nummer ist jedes einzelne Gerät identifizierbar. Die Nummern müssen fortlaufend gewählt sein, so daß es nicht zu Doppelbelegungen kommt. Eine Abwandlungsmöglichkeit dieses Ausführungsbeispiels besteht darin, den verschiedenen Geräten bestimmte Typenidentifikationsnummern zu geben. So kann z.B. sowohl allen Fernsehgeräten eines Typs die gleiche Identifikationsnummer gegeben werden als auch CD-Abspielgeräten eines Typs, allen Fernsteuerungen eines Typs, usw.. Sollten dann in einem multimedialen Verbund zwei identische Geräte erscheinen, so wären diese nur schwer zu unterscheiden. Hierzu wäre es dann erforderlich, daß alle Geräte in ihrer Bestätigungsbotschaft einen Namensvorschlag zu der Fernsteuerung übertragen. Insofern die Fernsteuerung dann ermittelt, daß ein derartiger Name schon im Speicher vorhanden ist, müßte dann automatisch ein anderer Name gewählt werden, der dann auch in einer separaten Botschaft dem zu bedienenden Gerät mitgeteilt werden müßte. So können dann Verwechslungen vermieden werden. Unter dem jeweiligen Namen hat sich dann jedes Gerät in der Zukunft wieder zu melden.

Vielfältige weitere Abwandlungen der Erfindung sind möglich. So ist es beispielsweise möglich, daß ein neu zu dem Multimedia-Verbund hinzugefügtes Gerät seine Informationsdaten nicht erst auf Anfrage von seiten der Fernsteuerung übermittelt, sondern automatisch nachdem es mit dem Stromversorgungsnetz verbunden wurde.

Die Informationsdaten müssen nicht unbedingt drahtlos zu dem Fernsteuerungsgerät übertragen werden. Wenn z.B. die einzelnen Geräte des Geräteverbunds in unterschiedlichen Räumen untergebracht sind und alle Geräte über ein separates Datennetz miteinander verbunden sind, kann die Übertragung der Informationsdaten zu dem Fernsteuerungsgerät auch über dieses Datennetz erfolgen. Das Fernsteuerungsgerät muß dann ebenfalls mit diesem Datennetz verbunden sein. Als Datennetz kommt auch das Stromversorgungsnetz in Betracht. Daran sind sowieso die Geräte angeschlossen. Das Fernsteuerungsgerät muß dann ebenfalls an das Stromversorgungsnetz angeschlossen sein. Auch ein Telefonnetz oder ein Funknetz kann als Datennetz zur Übertragung der Informationen Verwendung finden. Damit wird der Anwendungsbereich auch auf solche Fernsteuerungsfunktionen erweitert wie z.B. die Einschaltung einer Alarmanlage oder einer Heizungsanlage, etc. mit Hilfe der Fernsteuerung. Dazu kann die Fernsteuerung auch so ausgelegt sein, daß sie einerseits portabel ausgelegt ist, jedoch ebenfalls eine Schnittstelle für den Datenempfang über das Datennetz (Stromversorgungsnetz) aufweist um die Informationsdaten vieler Geräte, die keinen Infrarotsender aufweisen, aufzunehmen. Das Fernsteuerungsgerät wird dafür zeitweilig an das Datennetz angeschlossen. Nachdem sie diese Daten aufgenommen hat, kann sie die Bedienung der Geräte drahtlos vornehmen, wenn die Geräte dazu ausgelegt sind.

Ebenfalls ist es möglich, daß die einzelnen Geräte 10 bis 25 nach dem gleichen Kommunikationsprotokoll untereinander Daten austauschen. Derartige Daten können z.B. Bild- und Audio-Daten sein. Es kann sich aber auch um ausgewählte Daten, z.B. be-züglich der Programmierung eines Videorecorders handeln.

Statt der Übertragung von Funktionscodes sowie Bedeutungscodes zu der Fernsteuerung könnten auch lediglich graphische Daten für die Ansteuerung der Anzeigeeinheit 30 übertragen werden. Es könnte sich dann bei den einzelnen Daten um Bitmap-Informationen handeln. Diese Daten könnten dann auf einem berührungssensitiven Bildschirm dargestellt werden. Die Bedienperson müßte dann lediglich die entsprechende Fläche des Bildschirms berühren, um einen Fernsteuerungsvorgang einzuleiten. Auch eine Sprachausgabe der empfangenen Daten an der Fernsteuerung wäre möglich.

Eine weitere Abwandlungsmöglichkeit besteht darin, daß die Informationsdaten bereits nach Empfang der Abfragebotschaft zu dem Fernsteuerungsgerät übertragen werden. Die Fernsteuerung würde dann diese Daten sofort im Speicher ablegen. Eine separate Bedienungsanforderungstaste wäre dann nicht erforderlich. Aller-dings wäre ein größerer Speicher notwendig.

Auch die Übertragung nur einzelner, besonderer Informationsdaten bezüglich einiger einzelner Fernsteuerungsfunktionen zu dem Fernsteuerungsgerät liegt noch im Bereich der Erfindung.

## Patentansprüche

1. Verfahren zur Fernsteuerung mindestens eines elektronischen Gerätes, insbesondere Fernsehgerätes, Videorecorders, Satellitenempfangsgerätes oder Audiogerätes, wobei die Steuerungsdaten von einem Fernsteuerungsgerät (27) zu dem elektronischen Gerät (10 bis 25) übertragen werden, wobei Informationsdaten mindestens bezüglich der Fernsteuerungsfunktionen des mindestens einen elektronischen Gerätes (10 bis 25) zu dem Fernsteuerungsgerät (27) übertragen werden und die Informationsdaten in dem Fernsteuerungsgerät (27) abgespeichert und ausgewertet werden, um bei einem Fernsteuerungsvorgang die jeweils für den Fernsteuerungsvorgang davon abgeleiteten, notwendigen Steuerungsdaten auszuwählen, **dadurch gekennzeichnet, daß** dem Fernsteuerungsgerät (27) ein Fernsteuerungstypcode (FBTC) zugeordnet ist und dieser Fernsteuerungstypcode (FBTC) bei bestimmten Kommunikationen zwischen Fernsteuerungsgerät (27) und elektronischem Gerät (10 bis 25) mitübertragen wird.

2. Verfahren nach Anspruch 1, wobei zumindest ein Teil der Informationsdaten, wie Identifikationsnummer (GID) und Gerätetyp automatisch, insbesondere nach Anschaltung des elektronischen Gerätes (10 bis 25) an ein Stromversorgungsnetz, von dem mindestens einem elektronischen Gerät (10 bis 25) zu dem Fernsteuerungsgerät (27) übertragen werden.

3. Verfahren nach Anspruch 1 oder 2, wobei der Fernsteuerungstypcode (FBTC) bei Übermittlung einer Bedienungsanforderungsbotschaft zu dem zu bedienenden elektronischen Gerät (10 bis 25) mitübertragen wird.

4. Verfahren nach einem der vorhergehenden Ansprüche, wobei ausgehend von den empfangenen Informationsdaten im Fernsteuerungsgerät (27) eine den empfangenen Informationsdaten entsprechende Tastenbelegung durchgeführt wird.

5. Verfahren nach Anspruch 4, wobei die aktuelle Tastenbelegung angezeigt wird.

6. Verfahren nach einem der vorhergehenden Ansprüche, wobei die Informationsdaten auch Daten bezüglich der Eingangsund Ausgangs-Möglichkeiten des mindestens einen elektronischen Gerätes (10 bis 25) beinhalten

7. Verfahren nach einem der vorhergehenden Ansprüche, wobei die Informationsdaten nach einem einheitlichen Kommunikationsprotokoll zu dem elektronischen Gerät (10 bis 25) übertragen werden.

8. Verfahren nach einem der vorhergehenden Ansprüche, wobei bei der Kommunikation zwischen Fernsteuerungsgerät (27) und elektronischem Gerät (10 bis 25) eine Identifikationsnummer (GID) des elektronischen Gerätes (10 bis 25) mitübertragen wird.

9. Verfahren nach einem der vorhergehenden Ansprüche, wobei das Fernsteuerungsgerät (27) eine Identifikationsnummer (FBID) aufweist und bei der Kommunikation zwischen Fernsteuerungsgerät (27) und elektronischem Gerät (10 bis 25) diese Identifikationsnummer (FBID) mitübertragen wird.

10. Elektronisches Gerät, insbesondere Fernsehgerät, Videorecorder, Satellitenempfangsgerät oder Audiogerät, mit einem Speicher (54), einer Sendeschaltung (51), einer Empfangsschaltung (50) und einer Steuereinheit(52), wobei in dem Speicher (54) ein erster Satz von Informationsdaten mindestens bezüglich der Fernsteuerungsfunktionen des elektronischen Gerätes (10 bis 25) abgespeichert ist, **dadurch gekennzeichnet, daß** das elektronische Gerät mindestens einen weiteren Satz von Informationsdaten für verschiedene Fernsteuerungsgerätetypen im Speicher (54) abgespeichert hat und, mit Mitteln zur Auswahl und Absendung desjenigen Satzes von Informationsdaten, der aufgrund eines empfangenen Fernsteuerungstypcodes (FBTC) angefordert wird.

11. Elektronisches Gerät nach Anspruch 10, wobei das elektronische Gerät (10 bis 25) eine Identifikationsnummer (GID) aufweist und Mittel aufweist, die zumindest einen Teil seiner Informationsdaten, insbesondere die Identifikationsnummer (GID) und den Gerätetyp automatisch, insbesondere nach Anschaltung des elektronischen Gerätes (10 bis 25) an ein Stromversorgungsnetz, absenden.

12. Elektronisches Gerät nach Anspruch 10 oder 11, wobei in ihm ebenfalls Informationsdaten bezüglich seiner Eingangs- und Ausgangs-Möglichkeiten abgespeichert sind , die bei der Absendung zusätzlich zu den Informationsdaten bezüglich der Fernsteuerungsfunktionen ausgesendet werden.

13. Elektronisches Gerät nach einem der Ansprüche 10 bis 12, wobei es Vergleichsmittel zum Vergleichen seiner Identifikationsnummer (GID) mit einer in einer empfangenen Kommunikationsbotschaft enthaltenen Identifikationsnummer aufweist.

14. Vorrichtung zur Fernsteuerung mindestens eines elektronischen Gerätes, mit einem Speicher (54), einer Sendeschaltung (51), einer Empfangsschaltung (50), einer Anzeigeeinheit (30), einer Bedieneinheit (53) und einer Steuereinheit (52), wobei die Vorrichtung Mittel aufweist, die nach Empfang von Informationsdaten bezüglich der Fernsteuerungsfunktionen des mindestens einen elektronischen Gerätes (10 bis 25) diese Daten in den Speicher (54) einschreiben, **dadurch gekennzeichnet, daß** die Vorrichtung Mittel aufweist, die bei bestimmten Kommunikationen zu dem mindestens einen elektronischen Gerät (10 bis 25) einen Fernsteuerungstypcode (FBTC) aussenden.

15. Vorrichtung nach Anspruch 14, **dadurch gekennzeichnet, dass** der Fernsteuerungstypcode (FBTC) über den Typ des Fernsteuerungsgerätes (27) Auskunft gibt.

16. Vorrichtung nach Anspruch 15, **dadurch gekennzeichnet, dass** der Fernsteuerungstypcode (FBTC) über die Anzeigemöglichkeiten des Fernsteuerungsgerätes (27) Auskunft gibt.

17. Vorrichtung nach einem der Ansprüche 15 bis 16, **dadurch gekennzeichnet, dass** die Vorrichtung mindestens eine Identifikationsnummer (FBID) aufweist und Vergleichsmittel zum Vergleichen seiner Identifikationsnummer mit einer in einer empfangenen Kommunikationsbotschaft enthaltenen Identifikationsnummer.

18. Vorrichtung nach einem der Ansprüche 15 bis 17, **dadurch gekennzeichnet, dass** die Vorrichtung eine Abfragetaste (34) aufweist, bei deren Betätigung ein Abfragecode ausgesendet wird, mit dem das mindestens eine elektronische Gerät (10 bis 25) zur Aussendung seiner Informationsdaten bezüglich der Fernsteuerungsfunktionen aufgefordert wird.

19. Vorrichtung nach einem der Ansprüche 15 bis 18, **dadurch gekennzeichnet, dass** die Vorrichtung Mittel aufweist, die nach Empfang der Informationsdaten bezüglich der Fernsteuerungsfunktionen des mindestens einen elektronischen Gerätes (10 bis 25) eine dementsprechende Tastenbelegung an der Bedieneinheit (53) durchführen.

20. Vorrichtung nach Ansprüch 19, **dadurch gekennzeichnet, dass** die Vorrichtung Mittel aufweist, die bei Betätigung einer Steuerungstaste einen entsprechend ihrer aktuellen Tastenbelegung zugeordneten Steuerungscode absenden.

21. Vorrichtung nach einem der Ansprüche 14 bis 20, **dadurch gekennzeichnet, dass** die Bedieneinheit (53) mit der Anzeigeeinheit (30) übereinstimmt, welche als berührungssensitive Anzeigeeinheit ausgestaltet ist.

## Claims

1. Method for the remote control of at least one electronic device, in particular of a television set, video recorder, satellite receiver or audio device, the control data being transmitted from a remote control device (27) to the electronic device (10 to 25), information data at least regarding the remote control functions of the at least one electronic device (10 to 25) being transmitted to the remote control device (27) and the information data being stored and evaluated in the remote control device (27) in order, during a remote control operation, to select the necessary control data which are derived from the said information data for the respective remote control operation, **characterized in that** a remote control type code (FBTC) is also being assigned to the remote control device (27) and this remote control type code (FBTC) being concomitantly transmitted at least during specific communications between the remote control device (27) and the electronic device (10 to 25).

2. Method according to Claim 1, wherein at least a part of the information data, such as the identification number (GID) and device type, are automatically, in particular after the connection of the electronic device (10 to 25) to a power supply system, transmitted from the at least one electronic device (10 to 25) to the remote control device (27).

3. Method according to Claim 1 or 2, the remote control type code (FBTC) being concomitantly transmitted during the communication of a control request message to the electronic device (10 to 25) to be controlled.

4. Method according to one of the preceding Claims, there being carried out, taking the received information data as a basis, in the remote control device (27) a key allocation, which corresponds to the received information data.

5. Method according to Claim 4, the current key allocation being displayed.

6. Method according to one of the preceding claims, the information data also containing data regarding the input and output possibilities of the at least one electronic device (10 to 25).

7. Method according to one of the previous Claims, the information data being transmitted to the electronic device (10 to 25) in accordance with a standard communications protocol.

8. Method according to one of the preceding claims, the identification number (GID) of the electronic device (10 to 25) being concomitantly transmitted during the communication between the remote control device (27) and the electronic device (10 to 25).

9. Method according to one of the preceding Claims, the remote control device (27) having an identification number (FBID) and this identification number (FBID) being concomitantly transmitted during the communication between the remote control device (27) and the electronic device (10 to 25).

10. Electronic device, in particular television set, video recorder, satellite receiver or audio device, having a memory (54), a transmitting circuit (51), a receiving circuit (50) and a control unit (52), information data at least regarding the remote control functions of the electronic device (10 to 25) being stored in the memory (54), **characterized in that** said electronic device has stored at least one further record of information data for different remote control device types in the memory (54), and comprising means for selecting and transmitting that record of information data which is requested on the basis of a received remote control type code (FBTC).

11. Electronic device according to Claim 10, the electronic device (10 to 25) has an identification number (GID) and has means which transmit at least part of its information data, in particular the identification number (GID) and the device type, automatically, in particular after the connection of the electronic device (10 to 25) to a power supply system.

12. Electronic device according to Claim 10 or 11, information data regarding its input and output possibilities likewise being stored in it and it transmitting the said data in addition to the information data regarding the remote control functions.

13. Electronic device according to one of Claims 10 to 12, wherein it has comparison means for comparing its identification number (GID) with an identification number contained in a received communications message.

14. Apparatus for the remote control of at least one electronic device, having a memory (54), a transmitting circuit (51), a receiving circuit (50), a display unit (30), an operator unit (53) and a control unit (52), the apparatus having means which, following the reception of information data regarding the remote control functions of the at least one electronic device (10 to 25), write these data to the memory (54), **characterized in that** the said apparatus includes means which transmit a remote control type code (FBTC) during specific communications between the remote control device (27) and the electronic device (10 to 25).

15. Apparatus according to Claim 14, the remote control type code (FBTC) giving information about the type of the remote control device (27).

16. Apparatus according to Claim 15, **characterized in that** the remote control type code (FBTC) gives information about the display possibilities of the remote control device (27).

17. Apparatus according to one of Claims 15 to 16, **characterized in that** the apparatus having at least one identification number (FBID) and comparison means for comparing its identification number with an identification number contained in a received communications message.

18. Apparatus according to one of Claims 15 to 17, **characterized in that** the apparatus has an interrogation key (34) whose actuation results in the transmission of an interrogation code with which the at least one electronic device (10 to 25) is requested to transmit its information data regarding the remote control functions.

19. Apparatus according to one of Claims 15 to 18 **characterized in that**, the apparatus includes means, which perform a key allocation in the control unit (53) which corresponds to the received information data, after reception of the information data regarding the remote control functions of the at least one electronic device (10 to 25).

20. Apparatus according to Claim 19, **characterized in that** the apparatus comprises means, which transmit, upon actuation of a control key, a control code, which is assigned in accordance with its current key allocation.

21. Apparatus according to one of Claims 14 to 20, **characterised** the control unit (53) is identical with the display unit (30), which itself is designed as a touch-sensitive screen.

## Revendications

1. Procédé pour la commande à distance d'au moins un équipement électronique, en particulier un téléviseur, un magnétoscope, un récepteur satellite ou un appareil audio, où les données de commande sont transmises d'un dispositif de commande à distance (27) à l'équipement électronique (10 à 25), où les données d'informations relatives aux fonctions de commande à distance d'au moins un équipement électronique (10 à 25) sont transmises au dispositif de commande à distance (27) et où les données d'informations sont stockées et évaluées dans le dispositif de commande à distance (27), pour sélectionner les données de commande découlant du processus de commande à distance, nécessaires lors d'un processus de commande à distance, **caractérisé en ce qu'**un code définissant le type de commande à distance (FBTC) est attribué au dispositif de commande à distance (27) et ce code définissant le type de commande à distance (FBTC) est transmis, lors de certaines communications, entre le dispositif de commande à distance (27) et l'équipement électronique (10 à 25).

2. Procédé selon la revendication 1, où au moins une partie des données d'informations, telles que le numéro d'identification (GID) et le type d'équipement est automatiquement transmise depuis au moins un équipement électronique (10 à 25) au dispositif de commande à distance, en particulier après raccordement de l'équipement électronique (10 à 25) à un réseau d'alimentation électrique.

3. Procédé selon la revendication 1 ou 2, où le code définissant le type de commande à distance (FBTC) est aussi transmis lors de la transmission d'un message de demande de commande à l'équipement électronique (10 à 25).

4. Procédé selon une des revendications précédentes, où, à partir des données d'informations reçues dans le dispositif de commande à distance (27), une attribution des touches correspondant aux données d'informations reçues est exécutée.

5. Procédé selon la revendication 4, où l'actuelle attribution des touches est affichée.

6. Procédé selon une des revendications précédentes, où les données d'informations comportent également des données relatives aux possibilités d'entrée et de sortie d'au moins un équipement électronique (10 à 25).

7. Procédé selon une des revendications précédentes, où les données d'informations sont transmises à l'équipement électronique (10 à 25) selon un protocole de communication homogène.

8. Procédé selon une des revendications précédentes, où un numéro d'identification (GID) de l'équipement électronique (10 à 25) est transmis lors de la communication entre le dispositif de commande à distance (27) et l'équipement électronique (10 à 25).

9. Procédé selon une des revendications précédentes, où le dispositif de commande à distance (27) présente un numéro d'identification (FBID) et où ce numéro d'identification (FBID) est transmis lors de la communication entre le dispositif de commande à distance (27) et l'équipement électronique (10 à 25).

10. Equipement électronique, en particulier un téléviseur, un magnétoscope, un récepteur satellite ou un appareil audio avec une mémoire (54), un circuit émetteur (51), un circuit récepteur (50) et une unité de commande (52), où un premier jeu de données d'informations concernant au moins les fonctions de commande à distance de l'équipement électronique (10 à 25) est stocké dans la mémoire (54), **caractérisé en ce que** l'équipement électronique possède au moins un autre jeu de données d'informations pour différents types de dispositifs de commande à distance stocké dans la mémoire (54) et **caractérisé en ce qu'**il est requis, avec des moyens de sélection et d'envoi de ce jeu de données d'informations permettant la sélection et l'envoi du jeu de données d'informations sur la base d'un code définissant le type de commande à distance (FBTC) reçu.

11. Equipement électronique selon la revendication 10, où l'équipement électronique (10 à 25) présente un numéro d'identification (GID) et présente des moyens qui envoient au moins une partie de ses données d'informations, en particulier le numéro d'identification (GID) et le type d'appareil, en particulier après le raccordement de l'équipement électronique (10 à 25) à un réseau d'alimentation électrique.

12. Equipement électronique selon la revendication 10 ou 11, dans lequel sont aussi stockées des données d'informations concernant ses possibilités d'entrée et de sortie, ces données étant transmises en plus des données d'informations relatives aux fonctions de commande à distance.

13. Equipement électronique selon une des revendications 10 à 12, possédant des moyens de comparaison permettant de comparer son numéro d'identification (GID) avec un numéro d'identification contenu dans un message de communication reçu.

14. Dispositif pour la commande à distance d'au moins un équipement électronique, avec une mémoire (54), un circuit émetteur ( 51), un circuit récepteur (50), un écran (30), une unité de service (53) et une unité de commande (52), où le dispositif possède des moyens qui écrivent ces données dans la mémoire (54) après réception de données d'informations relatives aux fonctions de commande à distance d'au moins un équipement électronique (10 à 25), **caractérisé en ce que** le dispositif possède des moyens pour transmettre un code définissant le type de commande à distance (FBTC) lors de certaines communications avec au moins un équipement électronique (10 à 25).

15. Dispositif selon la revendication 14, **caractérisé en ce que** code définissant le type de commande à distance (FBTC) donne des informations sur le type de dispositif de commande à distance (27).

16. Dispositif selon la revendication 15, **caractérisé en ce que** le code définissant le type de commande à distance (FBTC) donne des informations sur les possibilités d'affichage de l'appareil de commande à distance (27).

17. Dispositif selon une des revendications 15 à 16, **caractérisé en ce que** le dispositif présente au moins un numéro d'identification (FBID) et un moyen de comparaison pour comparer son numéro d'identification avec un numéro d'identification contenu dans un message d'information reçu.

18. Dispositif selon une des revendications 15 à 17, **caractérisé en ce que** le dispositif présente une touche d'interrogation (34), dont l'actionnement génère l'envoi d'un code d'interrogation, avec lequel au moins un équipement électronique (10 à 25) est invité à transmettre ses données d'informations relatives aux fonctions de commande à distance.

19. Dispositif selon une des revendications 15 à 18, **caractérisé en ce que** le dispositif présente des moyens qui exécutent une attribution des touches correspondante sur l'unité de service (53) après réception des données d'informations concernant les fonctions de commande à distance d'au moins un équipement électronique (10 à 25).

20. Dispositif selon la revendication 19, **caractérisé en ce que** le dispositif présente des moyens qui transmettent un code de commande attribué conformément à l'attribution de touche actuelle, lors de l'actionnement d'une touche de commande.

21. Dispositif selon une des revendications 14 à 20, **caractérisé en ce que** l'unité de service (53) est conforme à l'écran organisé comme un écran tactile.
